# EUROPEAN PATENT SPECIFICATION

(11) **EP 1 041 108 B1**
(45) Date of publication and mention of the grant of the patent: **27.10.2004**
(21) Application number: 99106361.1
(22) Date of filing: 29.03.1999
(51) Int. Cl.: C08J 9/18, C08J 9/20, C08L 25/04, C08L 51/00, C08F 257/02, C08F 12/08

(54) **Process for producing foamed styrene resin bead**
Verfahren zur Herstellung von aufschäumbaren Styrolharzpartikeln
Procédé pour fabriquer des perles expansibles de résine styrène

(43) Date of publication of application: 04.10.2000
(73) Proprietor: Chang, Young Bae, Anyang-si, Kyungki-do (KR)
(72) Inventor: Chang, Young Bae, Anyang-si, Kyungki-do (KR)
(74) Representative: Weber, Dieter, Dr.

(56) References cited:
- EP-A- 0 488 025
- EP-A- 0 555 471
- US-A- 4 041 108
- US-A- 4 663 357
- US-A- 4 761 432
- US-A- 4 980 382

## Description

### BACKGROUND OF THE INVENTION

### Field of the Invention

The present invention relates to a process for producing foamed styrene resin bead and more particularly, to the process for producing foamed styrene resin bead characterized in that pre-mixture comprising containing styrene monomer, crosslinking agent, chain transfer agent, initiator and surface active agent, and dispersion master are mixed and polymerized to a certain conversion rate followed by polymerization with additional styrene monomer and dispersion master. The foamed styrene resin bead so prepared exhibits improvement with respect to particle size distribution, cell uniformity, foaming and other mechanical properties.

### Description of the Related Art

The conventional process for producing a foamed styrene resin are as follows: a) one step process by which foamed styrene resin is produced continuously; and b) two step process which consists of production of styrene resin and forced introduction of foaming agent.

The foamed styrene resin produced by the conventional methods has good strength at the sacrifice of foaming ability and other physical properties, good flame retardancy at the sacrifice of insulation property and other properties, or good insulation property at the sacrifice of flame retardancy, strength, and other properties.

Further, according to the conventional process, the particle size of foamed styrene resin may be controlled by dispersing adjuvant and sizing agent so that the particle size distribution is too broad to control it, and the application of flame retardant with high bromine content and melting point causes non-uniformity of inter-cell and deterioration of the physical properties of the foamed styrene resin, and the reaction cycle time becomes too long.

### SUMMARY OF THE INVENTION

To solve such problems in the prior arts, the inventors have made intensive research on a novel process for producing foamed styrene resin bead. As a result, they found a novel process performed in such a manner that pre-mixture comprising containing styrene monomer, crosslinking agent, chain transfer agent, initiator and surface active agent, and dispersion master are mixed and polymerized to a certain conversion rate followed by polymerization with additional styrene monomer and dispersion master, thereby improving uniform particle size, particle size distribution, high foaminess and mechanical properties in spite of no use of dispersing adjuvant and sizing agent.

Therefore, it is an object of this invention to provide a process for producing foamed styrene resin bead with improved cell uniformity.

It is another object of this invention to provide a foamed styrene resin bead prepared through the process of this invention.

### Description of the Drawings

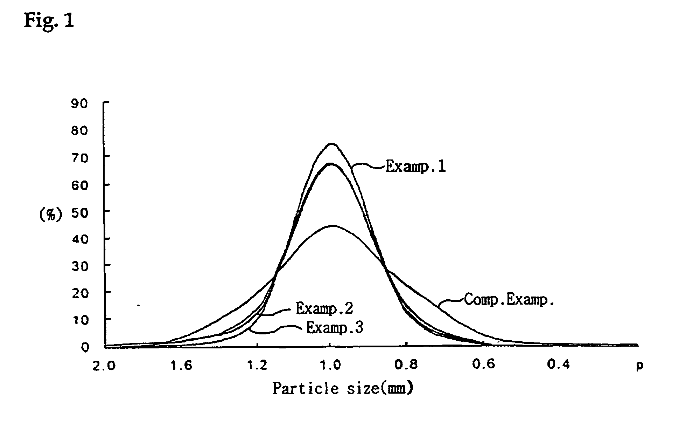

Fig. 1 is a graph showing particle size distribution of resin bead prepared according to this invention and conventional method.

### Detailed Description of the Invention

This invention is characterized by a process for producing foamed styrene resin bead comprising the following steps:
(a) the first polymerization step in which 10 to 30wt% of pre-mixture comprising styrene monomer, crosslinking agent, chain transfer agent, initiator and surface active agent, 0.5 to 6.0wt% of dispersion master comprising pure water and dispersing agent, 50 to 55wt% of hot pure water and 1 to 15wt% of styrene monomer are mixed in the reactor at 50 to 70 °C and then the reactor is heated to the temperature range of 80 to 100 °C;
(b) the second polymerization step in which, at the conversion rate of 5 to 15%, 5 to 25wt% of the pre-mixture, 1 to 15wt% of styrene monomer, 0.05 to 1.0 wt% of cell controller and 0.5 to 6.0wt% of dispersion master are further added to the reactor and then polymerized;
(c) the third polymerization step in which, at the conversion rate of 50 to 70%, 0.05 to 1.0wt% of cell controller and 0.5 to 6.0wt% of dispersion master are still further added to the reactor and then polymerized;
(d) the fourth polymerization step in which, at the conversion rate of 80 to 90%, 0.5 to 6.0wt% of dispersion master is further added to the reactor and then polymerized; and
(e) the step in which the reactor is heated to temperature of 110 to 135 °C and at the conversion rate of 85 to 95%, the flame retardant, inert gas and foaming agent are added.

The present invention is also characterized by styrene resin bead produced by the above-mentioned process.

The present invention is described in more detail as set forth hereunder:

### The first polymerization step

First of all, pre-mixture is prepared with styrene monomer, crosslinking agent, chain transfer agent, initiator and interfacial active agent at temperature of 15 to 25°C. It is preferred that the amount of styrene monomer is 75 to 95 wt% in proportion to the total pre-mixture.

The crosslinking agent, chain transfer agent, and initiator are added as additives. The crosslinking agent is preferably added by 0.01 to 2.5wt% in proportion to the total pre-mixture and is one or more selected from the group consisting of dicumylperoxide, acetylperoxide, t-allylbutylperoxide and t-allylbutylhydroperoxide.

The chain transfer agent is used to increase foaming ability of resin bead, which is one or more selected from the group consisting of cyclohexane, toluene, benzene, ethylbenzene, t-allylbenzene, t-allylbutylchloride, t-allylbutylbromide and isopropylene. The amount of the chain transfer agent is preferably 0.01 to 1.0wt%; if the amount is less than 0.01wt%, the foaming ability of resin bead is never improved and in excess of 1.0wt%, the property of end-product is poorer.

The initiator is used to shorten the reaction time, which is one or more selected from the group consisting of benzoylperoxide, laurylperoxide, t-butylperoxybenzoate, and 1,1-di(t-butylperoxy-3,3,5-trimethylcyclohexane). It is preferred that the amount of initiator is 0.05 to 1.0wt%; if the amount is not within 0.05 to 1.0wt%, it is difficult to control polymerization reaction.

According to this invention, preferably, the both hot and cold initiator are added together. Application of both hot and cold initiators increases the initiation efficiency, so that the reaction cycle time may be shortened. It is preferred that the hot initiator is one or more selected from the group consisting of t-butylperoxybenzoate and 1,1-di(t-butylperoxy-3,3,5-trimethylcyclohexane) and the cold initiator is one or more selected from the group consisting of benzoylperoxide and laurylperoxide. In the case of the both hot and cold initiators, it is preferred that the weight ratio is 1 : 6 to 1 : 2.

To endow resin bead with electrostatic screening effect, interfacial active agent is added by 0.005 to 1.0wt% in proportion to the total pre-mixture, which is one or more selected from the group consisting of glycerylmonostearate and hydroxyalkylamine.

The said compositions of pre-mixture are added to pre-mixer at 15 to 25 °C and then made to pre-mixture.

In the meantime, a dispersion master is prepared by following steps separated from the above preparation of pre-mixture.

The pure water is heated to 50 to 70 °C in the pure water tank equipped with heater to raise the production efficiency. Dispersion master is prepared in such a manner that 65 to 95wt% of hot pure water and 5 to 35wt% of dispersing agent to the total dispersion master are added to a dispersion tank and mixed, followed by heating to 70 to 90°C.

The said dispersing agent is used for the control of particle size and dispersion stability of particle, which is one or more selected from the group consisting of polyvinylpyrrolidone, tricalciumphosphate, polyvinylalcohol, cellulose derivative, calciumphosphate, and pyrrolidone. It is preferred that the amount of dispersing agent is 5 to 35wt% to the total dispersion master; if the amount is less than 5wt%, gel or cluster may be formed but in excess of 35wt%, powder or emulsified particle may be formed.

Following the preparation of the pre-mixture and dispersion master, 10 to 30wt% of said pre-mixture, 0.5 to 6.0wt% of dispersion master, 1 to 15 wt% of styrene monomer and 50 to 55wt% of hot pure water are mixed at 50 to 70 °C. Then, the reactor is heated to the temperature range of 80 to 100 °C, thereby being subject to suspension-polymerization. If the reaction is carried in the outside range of said temperature, undesirably it is impossible to obtain end-product with good property.

### The second and third polymerization steps

If the conversion rate of the first polymerization reaches 5 to 15%, 5 to 25wt% of the said pre-mixture, 1 to 15wt% of styrene monomer, 0.05 to 1.0wt% of cell controller, and 0.5 to 6.0wt% of dispersion master are added to the reactor and polymerized with stirring at a rate of 30 to 50 rpm for the control of particle size and the stability of the inter-cell of resin bead.

In the third step, if the conversion rate of the second polymerization reaches 50 to 70%, 0.05 to 1.0wt% of cell controller and 0.5 to 6.0wt% of dispersion master are added and polymerized.

The said cell controller is used to control uniformity of cell, which is one or more selected from the group consisting of sodium phosphate, ammonium sulfate, bromine hydrocarbon, polyethylene homopolymer. If the amount of cell controller is not within the said range, it is difficult to control uniformity of cell, so that a uniform cell cannot be obtained.

According to the present invention, said dispersion master is injected in several times and it is preferred that amount of dispersion master injected is controlled at each injection.

### The fourth polymerization step

When the conversion rate of third polymerization reaches 80 to 90%, 0.5 to 6.0wt% of dispersion master is further added for the stability of the particle distribution.

### The last step

After the fourth polymerization is completed, the reactor is heated to 110 to 135°C. When the conversion rate reaches 85 to 95%, flame retardant, inert gas and foaming agent are added and polymerized into foamed styrene polymer with bead type.

During said step, the reactor is heated to 110 to 135°C for the removal of residue, endowment of flame retardancy, cell control and impregnation of foaming agent. If less than 110 °C, it is not easy to remove residue and to control cell but in excess of 135 °C, property of end-product is degraded undesirably.

Then, when the conversion rate reaches 85 to 95 %, flame retardant that is used as melted form in tank equipped with heating or pressurizing means is added. The said flame retardant is used to reduce the danger of fire of resin bead, which is one or more selected from the group consisting of hexabromocyclododecane, tetrabromobisphenol-bisallylether, tribromophenylallylether and trisdibromopropylphosphate. The amount of flame retardant is 0.05 to 1.0wt%, preferably. If the amount of flame retartant is less than 0.05wt%, the effect of flame retardancy may be reduced but if the amount more than 1.0wt%, heat resistance and other properties of resin bead may be reduced.

The said inert gas such as nitrogen is injected until pressure of reactor is in the range of 2 to 4 kg/cm², in order to make injection of foaming agent easier and to make cell controller and flame retardant affect resin bead uniformly. If the pressure is not within said pressure range, foaming agent, cell controller and flame retardant cannot penetrate into resin bead uniformly so that the end-product of good property cannot be obtained.

Preferably, the said foaming agent is alkanes which has 3 to 6 of carbons. It is more preferred that the foaming agent is one or more selected from the group consisting of normal propane, normal butane, normal pentane, and isopentane. It is preferable that the amount of foaming agent is 5.0 to 10.0 wt%; if the amount of foaming agent is more than or less than said range, foaming ability is reduced and transformation of resin bead is induced, finally resulting in end-product with low quality.

In the last step, to shorten the reaction time and enlarge the aging effect, cold water of 5 to 7°C is injected by a certain quantity so that the foamed polymer of bead type is cooled to 15 to 20 °C.

Then, the foamed polymer is washed out by drum screen for improvements of fusion and strength of foamed resin bead, dehydrated by centrifuge, and then dried by dehumidified hot air from dehumidifier to minimize the release of foaming agent and moisture content which occur in case of steam drying, by high drying-heating treatment.

It is preferred that the total amount of dispersion master and cell controller is 2 to 25wt% and 0.1 to 2.0wt%, respectively. If injection time and amount of dispersion master and cell controller are not within the above range, cluster, gel, and cell non-uniformity *et. al* occur so that it is difficult to control particle size and to stabilize cell structure.

According to this invention, foamed styrene resin bead is suspension-polymerized with pre-mixture and dispersion master. The said dispersion master is injected in several times for the control of the particle size and particle size distribution, and uniformity of cell composition. Furthermore, styrene monomer mixture is injected in two steps and the flame retardant is injected at the time that the foaming agent is added.

Therefore, this invention is designed to solve the problems such as cell non-uniformity and decrease of strength in the prior art.

The following specific examples are intended to be illustrative of the invention and should not be construed as limiting the scope of the invention as defined by appended claims.

### EXAMPLE 1

36kg of styrene monomer, 89g of dicumylperoxide, 45g of ethylbenzene, 89g of t-butylperoxybezoate, 178g of benzoylperoxide and 20g of glycerylmonostearate were mixed in the pre-mixer to prepare pre-mixture.

4.04 kg of pure water, which was pre-heated to 70°C in pure water tank and 0.71kg of tricalciumphosphate were heated to 90°C in the dispersion tank and mixed for 2 hrs so that dispersion master was prepared.

From pure water tank, dispersion tank, pre-mixing tank and styrene monomer tank, respectively, 44.5kg of pure water, 1.14kg of dispersion master, 18.2kg of the pre-mixture and 2.0kg of styrene monomer were injected to polymerization bath of 60°C sequentially, heated to 90°C, and suspension-polymerized.

When the conversion rate reached 10%, 44.5g of polyethylene homopolymer and 1.14kg of the third dispersion master were injected.

When the reaction was almost completed, particle size was observed and the mixture consisting of 1.79g of calcium hydroxide and 30g of pure water was added. When the first reaction was completed, 1.14kg of the fourth dispersion master was injected and heated to 120°C.

After 90 min, the melt of 178g of tetrabromobisphenol-bisallylether and 267g of tribromophenylallylether was injected and was filled with nitrogen gas to 2kg/cm². Then, 3.56kg of pentane was injected and injection was completed after 60 min. After the conversion rate was 99.8 %, the reaction was terminated.

After the resin bead was cooled to 80°C in the polymerization bath, the resin bead slurry was cooled to 15 to 20°C by cooling circulator where cold water of 5 to 7°C was injected continuously. Then, resin bead was washed out by pure water for 20 min using the washing drum screen and was injected into cooling tank at less than 15°C. Then, 45wt% of resin bead and 55wt% of water were mixed at 20rpm, in the cooling tank. After dehydrogenation and heat-drying by dehydrogenation system, foamed styrene resin bead was finally produced.

### EXAMPLE 2

Foamed styrene resin bead was produced according to the same procedure as described in the example 1, except the following treatment: The weight ratio of first to second pre-mixtures was 60 : 40. 7.2kg of pure water and 0.8kg of polyvinylpyrrolidone were injected, heated to 90°C and mixed at 40 rpm for 3hrs so that dispersion master was produced. When the conversion rate of the first reaction reached 85 %, 2.2g of tincarboxylate was added. When the reaction conversion rate reached 90%, 1.79g of calcium hydroxide and 30g of pure water were added and mixed, and foamed styrene resin bead was finally produced.

### EXAMPLE 3

Foamed styrene resin bead was produced according to the same procedure as described in the example 1, except the following treatments: The weight ratio of first to second pre-mixtures was 70 : 30 and chain transfer agent was not used. 2.23kg of pure water and 223.0g of polyvinylalcohol were injected into dispersion tank, heated to 80 °C and mixed at 50rpm for 1 hr so that dispersion master was produced. When the conversion rate of the first reaction reached 85%, 2.2g of tincarboxylate was added. When the reaction conversion rate reached 90%, 0.9g of ammonium laurylsulfate and 30g of pure water were added and mixed, and foamed styrene resin bead was finally produced.

### COMPARATIVE EXAMPLE

Foamed styrene resin bead was produced according to the same procedure as described in the example 1, except following treatments: Pure water of room temperature, dispersion master, styrene monomer, initiator and flame retardant were injected together before polymerization, of which amounts were the same as example 1, respectively and cell controller in the process was added at once, finally preparing foamed styrene resin bead.

### TEST

The properties of resin bead produced according to example 1 to 3 and comparative example were tested and the results is shown in Table 1.

**Table 1**

| Category | | Example 1 | Example 2 | Example 3 | Comparative Example |
|---|---|---|---|---|---|
| Expansion ratio (times) | Immediately after production | 84 | 83 | 84 | 70 |
| | After aging for 90 days | 80 | 79 | 81 | 63 |
| Strength (kg/cm²) | Compression Strength | 1.6 | 1.4 | 1.5 | 1.0 |
| | Flexural Strength | 3.3 | 2.8 | 2.7 | 2.2 |

The expansion ratio of the expanded styrene resin bead is measured with a beaker (1L) for measuring volume designed to measure prepuffs. The prepuffs is produced by expanding with steam pressure 0.3kg/cm2 for 50sec by the pressure batch expander (Shinyoung Machine Co., Korea), followed by drying in fluidized bed dryer.

The compression and flexural strengths are measured based on KSM-3808 with the tensile-strength tester (Instron Co., US), after resin beads prepared in examples and comparative example was molded in the mold (Shinyoung Machine Co., Korea) of 55 x 60 x 90 cm

As shown in figure 1, in case of example 1, the particle size of resin bead 98.7% is within 0.8 to 1.2mm and reaction cycle is shortened by more than 5 hrs as compared to that in the prior arts.

In the present invention, the expansion ration of expanded resin bead is improved and blocking effect of expanded resin bead seldom occurred (0.05 %). The surface shrinkage of expanded resin bead scarcely be observed and both internal and external cell structure is uniform.

The molded product shows superior fusion property, smooth and gloss surface and lower humidity.

Further, after aging for 90days, the expansion ratio and fusion property of the molded product are seldom decreased as compared to the resin bead immediately after production. The expansion ratio and the fusion property of the resin bead in prior art is notably decreased.

As mentioned above, the foamed styrene resin bead prepared according to this invention is prepared in such a manner that unlike the conventional process, styrene monomer, dispersing agent and cell controller is separately added to polymerization mixture in several times, thereby making the control of the particle size and particle size distribution easier.

The foamed styrene resin bead prepared in accordance with this invention shows excellent the expansion ratio, fusion property, cell uniformity and mechanical property. Further, since the release of foaming agent is prevented so that the conservative force, fusion property at molding, flame retardancy and moisture resistance are improved.

## Claims

1. A process for producing foamed styrene resin bead, which comprises the steps of:
(a) the first polymerization step in which 10 to 30wt% of pre-mixture comprising styrene monomer, crosslinking agent, chain transfer agent, initiator and surface active agent, 0.5 to 6.0wt% of dispersion master comprising pure water and dispersing agent, 50 to 55wt% of hot pure water and 1 to 15wt% of styrene monomer are mixed in the reactor at 50 to 70 °C and then the reactor is heated to the temperature range of 80 to 100 °C;
(b) the second polymerization step in which, at the conversion rate of 5 to 15%, 5 to 25wt% of the pre-mixture, 1 to 15wt% of styrene monomer, 0.05 to 1.0 wt% of cell controller and 0.5 to 6.0wt% of dispersion master are further added to the reactor and then polymerized;
(c) the third polymerization step in which, at the conversion rate of 50 to 70%, 0.05 to 1.0wt% of cell controller and 0.5 to 6.0wt% of dispersion master are still further added to the reactor and then polymerized;
(d) the fourth polymerization step in which, at the conversion rate of 80 to 90%, 0.5 to 6.0wt% of dispersion master is further added to the reactor and then polymerized; and
(e) the step in which the reactor is heated to temperature of 110 to 135 °C and at the conversion rate of 85 to 95%, the flame retardant, inert gas and foaming agent are added.

2. The process for producing foamed styrene resin bead as claimed in claiml, wherein said pre-mixture comprises 75 to 95wt% of styrene monomer, 0.01 to 2.5wt% of crosslinking agent, 0.01 to 1.0wt% of chain transfer agent, 0.05 to 1.0wt% of initiator and 0.005 to 1.0wt% of surface active agent.

3. The process for producing foamed styrene resin bead as claimed in claim 1 and claim 2, wherein said crosslinking agent is one or more selected from the group consisting of dicumylperoxide, acetylperoxide, t-allylbutylperoxide, and t-allylbutylhydroperoxide.

4. The process for producing foamed styrene resin bead as claimed in claim 1 and claim 2, wherein said chain transfer agent is one or more selected from the group consisting of cyclohexane, toluene, benzene, ethylbenzene, t-allylbenzene, t-allylbutylchloride, t-allylbutylbromide and isopropylbenzene.

5. The process for producing foamed styrene resin bead as claimed in claim 1 and claim 2, wherein said initiator is one or more selected from the group consisting of benzoylperoxide, laurylperoxide, t-butylperoxybenzoate, and 1,1-di(t-butylperoxy-3,3,5-trimethylcyclohexane).

6. The process for producing foamed styrene resin bead as claimed in claim 1 and claim 2, wherein said initiator comprises hot initiator and cold initiator of which the weight ratio is 1 : 6 to 1 : 2.

7. The process for producing foamed styrene resin bead as claimed in claim 6, wherein said hot initiator is one or more selected from the group consisting of t-butylperoxybenzoate and 1,1-di(t-butylperoxy-3,3,5-trimethylcyclohexane)

8. The process for producing foamed styrene resin bead as claimed in claim 6, wherein said the cold initiator is one or more selected from the group consisting of benzoylperoxide and laurylperoxide.

9. The process for producing foamed styrene resin bead as claimed in claim 4, wherein said surface active agent is one or more selected from the group consisting of glycerylmonostearate and hydroxyalkylamine.

10. The process for producing foamed styrene resin bead as claimed in claim 1, wherein said dispersion master comprises 65 to 95wt% of pure water, 5 to 35wt% of dispersing agent which is one or more selected from the group consisting of polyvinylidone, tricalciumphosphate, polyvinylalcohol, cellulose derivative, calciumphosphate and pyrrolidone.

11. The process for producing foamed styrene resin bead as claimed in claim 1 and claim 7, wherein the injection number of said dispersion master can be changed according to dispersion stability.

12. The process for producing foamed styrene resin bead as claimed in claim 1, wherein said cell controller is one or more selected from the group consisting of sodiumphosphate, ammoniumsulphate, hexabromocyclododecane, and polyethylene wax.

13. The process for producing foamed styrene resin bead as claimed in claim 1, wherein said polymer comprises crosslinking agent, chain transfer agent, and surface active agent and flame retardant and foaming agent is added to said polymer.

14. The process for producing foamed styrene resin bead as claimed in claim 4, wherein 0.05 to 1.0wt% of said flame retardant is one or more selected from the group consisting of bisallylether, tribromophenylallylether, and trisdibromopropylphosphate.

15. The process for producing foamed styrene resin bead as claimed in claim 1, wherein 5.0 to 10.0wt% of said foaming agent is one or more selected from the group consisting of alkanes with 3 to 6 carbons.

16. The process for producing foamed styrene resin bead as claimed in claim 1, wherein said inert gas is injected until the pressure of reactor is in the range of 2 to 4 kg/cm².

17. The process for producing foamed styrene resin bead as claimed in claim 1, the cooling washing, dehydrating, and hot drying steps follows step (d).

18. A foamed styrene resin bead prepared by the process in claim 1.

## Patentansprüche

1. Verfahren zur Herstellung einer geschäumten Styrolharzperle, welches die folgenden Stufen umfaßt:
(a) eine erste Polymerisationsstufe, in der 10 bis 30 Gew.-% einer Vormischung, die Styrolmonomer, Vernetzungsmittel, Kettenüberträger, Initiator und grenzflächenaktiven Stoff enthält, 0,5 bis 6,0 Gew.-% Dispersionsgrundmittel, die reines Wasser und Dispersionsmittel enthält, 50 bis 55 Gew.-% heißes, reines Wasser und 1 bis 15 Gew.-% Styrolmonomer in dem Reaktor bei 50 bis 70 °C gemischt werden und der Reaktor dann auf den Temperaturbereich von 80 bis 100 °C erhitzt wird;
(b) eine zweite Polymerisationsstufe, in der bei der Umsetzungsgeschwindigkeit von 5 bis 15 % 5 bis 25 Gew.-% der Vormischung, 1 bis 15 Gew.-% Styrolmonomer, 0,05 bis 1,0 Gew.-% Zellregler und 0,5 bis 6,0 Gew.-% Dispersionsgrundmittel weiterhin zu dem Reaktor hinzugefügt und dann polymerisiert werden;
(c) eine dritte Polymerisationsstufe, in der bei der Umsetzungsgeschwindigkeit von 50 bis 70 % 0,05 bis 1,0 Gew.-% Zellregler und 0,5 bis 6,0 Gew.-% Dispersionsgrundmittel weiterhin zu dem Reaktor hinzugefügt und dann polymerisiert werden;
(d) eine vierte Polymerisationsstufe, in der bei der Umsetzungsgeschwindigkeit von 80 bis 90 % 0,5 bis 6,0 Gew.-% Dispersionsgrundmittel weiterhin zu dem Reaktor hinzugefügt und dann polymerisiert werden, und
(e) eine Stufe, in der der Reaktor auf eine Temperatur von 110 bis 135 °C erhitzt wird und bei der Umsetzungsgeschwindigkeit von 85 bis 95 % Flammverzögerungsmittel, Inertgas und Schäumungsmittel hinzugefügt werden.

2. Verfahren zur Herstellung von geschäumter Styrolharzperle nach Anspruch 1, wobei die Vormischung 75 bis 95 Gew.-% Styrolmonomer, 0,01 bis 2,5 Gew.-% Vernetzungsmittel, 0,01 bis 1,0 Gew.-% Kettenüberträger, 0,05 bis 1,0 Gew.-% Initiator und 0,005 bis 1,0 Gew.-% grenzflächenaktiven Stoff umfaßt.

3. Verfahren zur Herstellung von geschäumter Styrolharzperle nach Anspruch 1 oder Anspruch 2, wobei das Vernetzungsmittel eines oder mehrere, ausgewählt aus der Gruppe, bestehend aus Dicumylperoxid, Acetylperoxid, t-Allylbutylperoxid und t-Allylbutylhydroperoxid, ist.

4. Verfahren zur Herstellung von geschäumter Styrolharzperle nach Anspruch 1 oder Anspruch 2, wobei der Kettenüberträger einer oder mehrere, ausgewählt aus der Gruppe, bestehend aus Cyclohexan, Toluol, Benzol, Ethylbenzol, t-Allylbenzol, t-Allylbutylchlorid, t-Allylbutylbromid und Isopropylbenzol, ist.

5. Verfahren zur Herstellung von geschäumter Styrolharzperle nach Anspruch 1 oder Anspruch 2, wobei der Initiator einer oder mehrere, ausgewählt aus der Gruppe, bestehend aus Benzoylperoxid, Laurylperoxid, t-Butylperoxybenzoat und 1,1-Di-(t-butylperoxy-3,3,5-trimethylcyclohexan), ist.

6. Verfahren zur Herstellung von geschäumter Styrolharzperle nach Anspruch 1 oder Anspruch 2, wobei der Initiator heißen Initiator und kalten Initiator in einem Gewichtsverhältnis von 1:6 bis 1:2 umfaßt.

7. Verfahren zur Herstellung von geschäumter Styrolharzperle nach Anspruch 6, wobei der heiße Initiator einer oder mehrere, ausgewählt aus der Gruppe, bestehend aus t-Butylperoxybenzoat und 1,1-Di-(t-butylperoxy-3,3,5-trimethylcyclohexan), ist.

8. Verfahren zur Herstellung von geschäumter Styrolharzperle nach Anspruch 6, wobei der kalte Initiator einer oder mehrere, ausgewählt aus der Gruppe, bestehend aus Benzoylperoxid und Laurylperoxid, ist.

9. Verfahren zur Herstellung von geschäumter Styrolharzperle nach Anspruch 4, wobei der grenzflächenaktive Stoff einer oder mehrere, ausgewählt aus der Gruppe, bestehend aus Glycerylmonostearat und Hydroxyalkylamin, ist.

10. Verfahren zur Herstellung von geschäumter Styrolharzperle nach Anspruch 1, wobei das Dispersionsgrundmittel 65 bis 95 Gew.-% reines Wasser, 5 bis 35 Gew.-% Dispersionsmittel, welches eines oder mehrere, ausgewählt aus der Gruppe, bestehend aus Polyvinylidon, Tricalciumphosphat, Polyvinylalkohol, Cellulosederivat, Calciumphosphat und Pyrrolidon, ist, umfaßt.

11. Verfahren zur Herstellung von geschäumter Styrolharzperle nach Anspruch 1 oder Anspruch 7, wobei die Injektionszahl des Dispersionsgrundmittels gemäß der Dispersionsstabilität verändert werden kann.

12. Verfahren zur Herstellung von geschäumter Styrolharzperle nach Anspruch 1, wobei der Zellregler einer oder mehrere, ausgewählt aus der Gruppe, bestehend aus Natriumphosphat, Ammoniumsulfat, Hexabromcyclododecan und Polyethylenwachs, ist.

13. Verfahren zur Herstellung von geschäumter Styrolharzperle nach Anspruch 1, wobei das Polymer Vernetzungsmittel, Kettenüberträger und grenzflächenaktiven Stoff umfaßt und Flammenverzögerungsmittel und Schaumerzeuger zu dem Polymer hinzugefügt werden.

14. Verfahren zur Herstellung von geschäumter Styrolharzperle nach Anspruch 4, wobei 0,05 bis 1,0 Gew.-% des Flammverzögerungsmittels eines oder mehrere, ausgewählt. aus der Gruppe, bestehend aus Bisallylether, Tribromphenylallylether und Trisdibrompropylphosphat, sind.

15. Verfahren zur Herstellung von geschäumter Styrolharzperle nach Anspruch 1, wobei 5,0 bis 10,0 Gew.-% des Schaumerzeugers einer oder mehrere, ausgewählt aus der Gruppe, bestehend aus Alkanen mit 3 bis 6 Kohlenstoffatomen, sind.

16. Verfahren zur Herstellung von geschäumter Styrolharzperle nach Anspruch 1, wobei das Inertgas injiziert wird, bis der Druck des Reaktors im Bereich von 2 bis 4 kg/cm² liegt.

17. Verfahren zur Herstellung von geschäumter Styrolharzperle nach Anspruch 1, wobei der Stufe (d) Kühl-, Wasch-, Dehydratisierungs- und Heißtrocknungsstufen folgen.

18. Geschäumte Styrolharzperle, hergestellt nach dem Verfahren von Anspruch 1.

## Revendications

1. Procédé de fabrication de perles de mousse d'une résine de styrène, qui comprend les étapes suivantes :
(a) une première étape de polymérisation dans laquelle 10 à 30 % en poids d'un prémélange contenant un monomère de styrène, un agent de réticulation, un agent de transfert de chaîne, un inducteur et un agent tensioactif, 0,5 à 6,0 % en poids d'une composition de dispersion contenant de l'eau pure et un agent dispersant, 50 à 55 % en poids d'eau pure chaude, et 1 à 15 % en poids de monomère de styrène sont mélangés dans un réacteur entre 50 et 70 °C, et le réacteur est chauffé dans une plage de températures de 80 à 100 °C,
(b) une seconde étape de polymérisation dans laquelle, pour un taux de conversion de 5 à 15 %, 5 à 25 % en poids du prémélange, 1 à 15 % en poids du monomère de stryrène, 0,05 à 1,0 % en poids d'un agent de réglage de cellules et 0,5 à 6,0 % en poids de la composition de dispersion sont en outre ajoutés au réacteur puis polymérisés,
(c) une troisième étape de polymérisation dans laquelle, pour un taux de conversion de 50 à 70 %, 0,05 à 1,0 % en poids d'agent de réglage de cellules et 0,5 à 6,0 % en poids de composition de dispersion sont encore ajoutés au réacteur puis polymérisés,
(d) une quatrième étape de polymérisation dans laquelle, pour un taux de conversion de 80 à 90 %, 0,5 à 6,0 % en poids de la composition de dispersion sont en outre ajoutés au réacteur puis polymérisés, et
(e) une étape dans laquelle le réacteur est chauffé à une température comprise entre 110 et 135 °C, et, au taux de conversion de 85 à 95 %, l'agent ignifuge, un gaz inerte et un agent porogène sont ajoutés.

2. Procédé de fabrication de perles de mousse d'une résine de styrène selon la revendication 1, dans lequel le prémélange contient 75 à 95 % en poids de monomère de styrène, 0,01 à 2,5 % en poids d'agent de réticulation, 0,01 à 1,0 % en poids d'agent de transfert de chaîne, 0,05 à 1,0 % en poids d'inducteur et 0,005 à 1,0 % en poids d'agent tensioactif.

3. Procédé de fabrication de perles de mousse d'une résine de styrène selon la revendication 1 ou 2, dans lequel l'agent de réticulation est formé par un ou plusieurs composés choisis dans le groupe formé par le peroxyde de dicumyle, le peroxyde d'acétyle, le peroxyde de t-allylbutyle et l'hydroxyperoxyde de t-allylbutyle.

4. Procédé de fabrication de perles de mousse d'une résine de styrène selon la revendication 1 et 2, dans lequel l'agent de transfert de chaîne est un ou plusieurs composés choisis dans le groupe formé par le cyclohexane, le toluène, le benzène, l'éthylbenzène, le t-allylbenzène, le chlorure de t-allylbutyle, le bromure de t-allylbutyle et l'isopropylbenzène.

5. Procédé de fabrication de perles de mousse d'une résine de styrène selon la revendication 1 et 2, dans lequel l'inducteur est un ou plusieurs composés choisis dans le groupe formé par le peroxyde de benzoyle, le peroxyde de lauryle, le peroxybenzoate de t-butyle et le 1,1-di(t-butylperoxy-3,3,5-triméthylcyclohexane).

6. Procédé de fabrication de perles de mousse d'une résine de styrène selon la revendication 1 et 2, dans lequel l'inducteur contient un inducteur à chaud et un inducteur à froid dont le rapport pondéral est compris entre 1/6 et 1/2.

7. Procédé de fabrication de perles de mousse d'une résine de styrène selon la revendication 6, dans lequel l'inducteur à chaud est formé d'un ou plusieurs composés choisis dans le groupe constitué par le peroxybenzoate de t-butyle et le 1,1-di(t-butylperoxy-3,3,5-triméthylcyclohexane).

8. Procédé de fabrication de perles de mousse d'une résine de styrène selon la revendication 6, dans lequel l'inducteur à froid est un ou plusieurs composés choisis dans le groupe constitué par le peroxyde de benzoyle et le peroxyde de lauryle.

9. Procédé de fabrication de perles de mousse d'une résine de styrène selon la revendication 4, dans lequel l'agent tensioactif est un ou plusieurs composés choisis dans le groupe formé par le monostéarate de glycéryle et l'hydroxyalkylamine.

10. Procédé de fabrication de perles de mousse d'une résine de styrène selon la revendication 1, dans lequel la composition de dispersion contient 65 à 95 % en poids d'eau pure, 5 à 35 % en poids d'un agent dispersant qui est un ou plusieurs composés choisis dans le groupe formé par la polyvinylidone, le phosphate tricalcique, l'alcool polyvinylique, un dérivé de la cellulose, le phosphate de calcium et la pyrrolidone.

11. Procédé de fabrication de perles de mousse d'une résine de styrène selon les revendications 1 et 7, dans lequel l'ordre d'injection de la composition de dispersion peut être changé en fonction de la stabilité de la dispersion.

12. Procédé de fabrication de perles de mousse d'une résine de styrène selon la revendication 1, dans lequel l'agent de réglage de cellules est un ou plusieurs composés choisis dans le groupe formé par le phosphate de sodium, le sulfate d'ammonium, l'hexabromocyclododécane et une cire de polyéthylène.

13. Procédé de fabrication de perles de mousse d'une résine de styrène selon la revendication 1, dans lequel le polymère contient un agent de réticulation, un agent de transfert de chaîne et un agent tensioactif, et un agent ignifuge et un agent porogène sont ajoutés au polymère.

14. Procédé de fabrication de perles de mousse d'une résine de styrène selon la revendication 4, dans lequel 0,05 à 1,0 % en poids d'agent ignifuge sont formés par un plusieurs composés choisis dans le groupe constitué par le bisallyléther, le tribromophénylallyléther et le trisdibromopropylphosphate.

15. Procédé de fabrication de perles de mousse d'une résine de styrène selon la revendication 1, dans lequel 5,0 à 10,0 % en poids de l'agent porogène sont choisis parmi un ou plusieurs composés choisis dans le groupe formé par les alcanes ayant 3 à 6 atomes de carbone.

16. Procédé de fabrication de perles de mousse d'une résine de styrène selon la revendication 1, dans lequel le gaz inerte est injecté jusqu'à ce que la pression du réacteur soit comprise entre 2 et 4 bar (kg/cm²).

17. Procédé de fabrication de perles de mousse d'une résine de styrène selon la revendication 1, dans lequel les étapes de lavage de refroidissement, de déshydratation et de séchage à chaud suivent l'étape (d).

18. Perles de mousse de résine de styrène préparées par le procédé de la revendication 1.
